# EUROPÄISCHE PATENTANMELDUNG

(11) **EP 2 775 085 A2**
(43) Veröffentlichungstag der Anmeldung: **10.09.2014**
(21) Anmeldenummer: 14000511.7
(22) Anmeldetag: 13.02.2014
(51) Int. Cl.: E06B 3/964

(54) **Profilverbinder**

(30) Priorität: 08.03.2013 DE 102013102339; 22.01.2014 DE 102014100688
(71) Anmelder: Dorma GmbH & Co. KG, 58256 Ennepetal (DE)
(72) Erfinder: Liebscher, Ame, D-58313 Herdecke (DE); Finke, Andreas, D-58285 Gevelsberg (DE); Baruth, Andreas, D-32108 Bad Salzuflen (DE)

(57) **Zusammenfassung**

Die Erfindung betrifft einen Profilverbinder (10) für die Verdrehsicherung einer Verbindung eines ersten Rahmenflügelprofils (120) mit einem zweiten Rahmenflügelprofil (130) auf Stoß, aufweisend einen ersten Abstützabschnitt (20) für eine verdrehsichere Abstützung an dem ersten Rahmenflügelprofil (120) und einen zweiten Abstützabschnitt (30) für die verdrehsichere Abstützung an dem zweiten Rahmenflügelprofil (130).

## Beschreibung

Die vorliegende Erfindung betrifft einen Profilverbinder für Verdrehsicherung einer Verbindung eines ersten Rahmenflügelprofils mit einem zweiten Rahmenflügelprofil auf Stoß sowie einen Profilrahmen mit zumindest einem ersten und einem zweiten Rahmenflügelprofil, weiche miteinander auf Stoß verbunden sind.

Grundsätzlich ist es bekannt, dass Profilrahmen, z.B. für die Aufnahme von Glasscheiben, aus einzelnen Rahmenflügelprofilen zusammengesetzt werden. Üblicherweise können solche Rahmenflügelprofile im Strangpress- oder Stranggussverfahren hergestellt werden, so dass sie eine im Wesentlichen geradlinige Erstreckung aufweisen. Um eine Füllung in Form eines Glases vollständig mit einem Profilrahmen umgeben zu können, sind dementsprechend an der Oberseite und an der Unterseite jeweils ein horizontales Rahmenflügelprofil und an den beiden Seiten links und rechts jeweils ein vertikales Rahmenflügelprofil notwendig. Nach dem Umrahmen mit diesen vier Rahmenflügelprofilen müssen diese einzelnen Rahmenflügelprofile an den Ecken miteinander verbunden werden. Diese Verbindung erfolgt bei bekannten Profilrahmen auf Gehrung und dementsprechend durch die Erzeugung eines 45° Schnittes. An dem unteren Ende bekannter Profilrahmen ist es auch bekannt, eine Verbindung auf Stoß auszuführen.

Bei bekannten Profilrahmen werden die Verbindungen im Wesentlichen ausschließlich durch ein Verkleben fixiert. Vor diesem Verkleben müssen Vorbereitungsschritte stattfinden. Erfolgt die Verbindung auf Gehrung, so müssen die beiden Rahmenflügelprofile den entsprechenden Gehrungswinkel aufweisen und dementsprechend geschnitten werden. Bei einer Anbindung auf Stoß aneinander, muss an dem jeweils einen horizontalen Profil eine entsprechende Anlageleiste abgefräst werden, um Platz für die Stoßverbindungsaufnahme des vertikalen Rahmenflügelprofils zu schaffen. In beiden Fällen ist also der Zusatzaufwand einer spanenden Bearbeitung notwendig. Darüber hinaus entsteht, insbesondere bei einer Verbindung auf Gehrung, Verschnitt, welcher als Ausschuss gilt. Nicht zuletzt ist der Schritt des Verklebens relativ aufwendig und muss z.B. durch Spezialwerkzeuge in Form von Spannzangen durchgeführt werden. Auch das Aushärten des Klebers kostet Zeit, wodurch die gesamte Herstellung verzögert wird. Eine anders geartete Befestigung, z.B. durch ein Verschrauben, ist bei bekannten Profilrahmen jedoch nicht möglich, da ansonsten die gewünschte Festigkeit der Verbindung zwischen den beiden benachbarten Rahmenflügelprofilen nicht oder nur mit sehr hohem konstruktiven Aufwand erreicht werden kann.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise eine Montage eines Profilrahmens zur Verfügung zu stellen.

Voranstehende Aufgabe wird gelöst durch einen Profilverbinder mit den Merkmalen des Anspruchs 1 sowie durch einen Profilrahmen mit den Merkmalen des Anspruchs 7. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Profilverbinder beschrieben sind, selbstverständlich auch im Zusammenhang mit dem erfindungsgemäßen Profilrahmen und jeweils umgekehrt, so dass bzgl. der Offenbarung zu den einzeinen Erfindungsaspekten stets wechselseitig Bezug genommen wird bzw. werden kann.

Bei einem erfindungsgemäßen Profilverbinder ist dieser für die Verdrehsicherung einer Verbindung eines ersten Rahmenflügelprofils mit einem zweiten Rahmenflügelprofil auf Stoß ausgebildet. Hierfür weist der Profilverbinder gemäß der vorliegenden Erfindung einen ersten Abstützabschnitt für eine verdrehsichere Abstützung an dem ersten Rahmenflügelprofil auf. Weiter weist der erfindungsgemäße Profilverbinder einen zweiten Abstützabschnitt für die verdrehsichere Abstützung an dem zweiten Rahmenflügelprofil auf.

Durch eine Ausführungsform gemäß der vorliegenden Erfindung wird also durch einen Profilverbinder ein zusätzliches Bauteil im Vergleich zu bekannten Rahmenprofilen zur Verfügung gestellt. Dieses zusätzliche Bauteil ist fokussiert auf die Funktion der Verdrehsicherung. Somit kann die reine Verbindung, also die mechanische Befestigung von zwei aneinandergrenzenden Rahmenflügelprofilen unabhängig von der Funktionalität der Verdrehsicherung erfolgen. So kann bei einer Klebeverbindung, einer Schraubverbindung, einer Rastverbindung, einer Nietverbindung oder jeglicher anderen Form der Verbindung zwischen den beiden benachbarten Rahmenflügelprofilen eine Verdrehsicherung unbeachtlich bleiben. Diese Verdrehsicherung wird nämlich in erfindungsgemäßer Weise nun durch den Profilverbinder zur Verfügung gestellt. Dies erlaubt es, mithilfe des Profilverbinders deutlich einfachere, kostengünstigere und vor allem leichter montierbare Möglichkeiten vorzusehen, um die beiden benachbarten Rahmenflügelprofile miteinander zu verbinden. Insbesondere können auf diese Weise Rahmenflügelprofile miteinander verbunden werden, die eine Verbindung auf Stoß aufweisen.

Im Vergleich zu bekannten Profilrahmen kann dabei insbesondere auf den aufwendigen Schritt einer Gehrungsverbindung verzichtet werden. Die damit einhergehenden Schritte des Verklebens und Verspannens mit aufwendigen Spannzangen können ebenfalls entfallen. Durch die Vereinfachung einer Stoßverbindung kann darüber hinaus eine spanende Bearbeitung bzw. der Verschnitt beim Erzeugen einer Gehrungsverbindung entfallen. Die Effizienz in der Herstellung steigt dadurch an.

Unter einem Rahmenflügelprofil ist im Sinne der vorliegenden Erfindung insbesondere ein Hohlprofil zu verstehen. Bei einem Rahmenflügelprofil handelt es sich insbesondere um ein Profil, welches zur seitlichen Aufnahme einer Füllung eines Profilrahmens ausgebildet ist. Eine derartige Füllung kann z.B. eine Glasscheibe sein. Jedoch sind auch andere Füllungen, welche durch das entsprechende Rahmenflügelprofil gehalten werden, denkbar. Ein Rahmenflügelprofil zeichnet sich also insbesondere durch wenigstens eine Aufnahmenut oder wenigstens eine Aufnahmefläche aus, welche für die Aufnahme einer Füllung für den Profilrahmen dient.

Unter einem Abstützabschnitt ist im Sinne der vorliegenden Erfindung ein Oberflächenabschnitt des Profilverbinders zu verstehen, welcher die verdrehsichere Abstützung an jeweils einem Rahmenflügelprofil erlaubt. Somit handelt es sich beim Abstützabschnitt insbesondere um eine Anlagefläche, welche zwischen Profilverbinder und Rahmenflügelprofil einen Kontakt herstsllt. Diese Anlagefläche ist derart ausgerichtet, dass eine Verdrehsicherung zwischen Profilverbinder und dem jeweiligen Rahmenflügelprofil hergestellt wird.

Durch die doppelte Verdrehsicherung, also die Ausbildung von zumindest zwei Abstützabschnitten wird sozusagen eine doppelte Verdrehsicherung über den Umweg des Profilverbinders möglich. Zur einen Seite stützt sich der Profilverbinder verdrehsicher gegen das erste Rahmenflügelprofil ab, während sich zur anderen Seite der Profilverbinder verdrehsicher gegen das zweite Rahmenflügelprofil abstützt. In Summe sind dementsprechend über den Umweg des Profilverbinders die beiden aneinandergrenzenden Rahmenflügelprofile gegeneinander verdrehsicher abgestützt.

Dabei ist darauf hinzuweisen, dass nicht zwangsläufig durch den Profilverbinder auch die tatsächliche Verbindung der beiden Rahmenflügelprofile erzeugt werden muss. Dies ist jedoch grundsätzlich möglich. Selbstverständlich können auch separate Befestigungsmittel, z.B. in Form von Schrauben, vorgesehen sein, um die tatsächliche Befestigung der Stoßverbindung der beiden Rahmenflügelprofile aneinander herstellen zu können. Auch eine Kombination von Befestigungsmittel und ebenfalls zur Befestigung dienendem Profilverbinder ist im Rahmen der vorliegenden Erfindung denkbar.

Durch einen erfindungsgemäßen Profilverbinder wird nicht nur grundsätzlich das Herstellverfahren kostengünstiger und einfacher, sondern darüber hinaus auch der Ort der Herstellung frei wählbar. So ist es bei einem erfindungsgemäßen Profilverbinder auch denkbar, dass der tatsächliche Zusammenbau des Profilrahmens erst vor Ort, also am Einsatzort des Profilrahmens, erfolgt. Dies ermöglicht es, exakt und auf den Millimeter passgenaue Profilrahmen zur Verfügung zu stellen, ohne einen hohen Kostenaufwand in der Herstellung zur Verfügung stellen zu müssen. Während bei bisherigen Profilrahmen ausschließlich Standardgrößen für die Profilrahmen kosteneffizient hergestellt werden konnten, kann für Einzelfalllösungen nun direkt vor Ort auf der Baustelle eine millimetergenaue Anpassung der Breite und/oder der Höhe des Profilrahmens erfolgen. Der entsprechende Zuschnitt des zugehörigen Rahmenflügelprofils erfolgt ebenfalls auf der Baustelle, so dass die millimetergenaue Anpassung unter Zuhilfenahme des Profilverbinders zu einer Baustellenmontage führt.

Selbstverständlich können die Profilverbinder ausgebildet sein auch eine Demontage wieder zuzulassen. So können z.B. für temporäre Bauwerke solche reversiblen Profilrahmen zur Verfügung gestellt werden. Insbesondere hinsichtlich des Transports von solchen Bauteilen werden damit deutliche Platzreduktionen erreicht.

Unter einem Stoß ist im Sinne der vorliegenden Erfindung nicht zwangsläufig eine 90° Winkelverbindung zu verstehen. Jedoch wird ein Winkel von ca. oder im Wesentlichen 90° bevorzugt sein, da dies der üblichen Bauweise von Profilrahmen entspricht. Grundsätzlich sind jedoch auch andere Winkelverschneidungen, wie z.B. bei Dreiecksfenstem, im Sinne der vorliegenden Erfindung mithilfe eines Profilverbinders verbindbar.

Nicht zuletzt ist ein weiterer Vorteil der Verwendung eines erfindungsgemäßen Profilverbinders, dass die Gesamtanzahl unterschiedlicher Profile reduziert werden kann. So kann durch den Profilverbinder die Komplexität in der Herstellbreite unterschiedlicher Profilquerschnitte reduziert werden. Für unterschiedlichste Einsatzzwecke können somit insbesondere ein einziges Rahmenflügelprofil oder aber zwei Rahmenflügelprofile (vertikal und horizontal) zur Verfügung gestellt werden. Ohne die Variantenbreite von unterschiedlichsten Profilrahmen einzuschränken, kann auf diese Weise eine deutlich erhöhte Kosteneffizienz in der Herstellung von nur einem oder zwei unterschiedlichen Rahmenflügelprofilen erzielt werden.

Es kann von Vorteil sein, wenn bei einem erfindungsgemäßen Profilverbinder wenigstens eine Montageöffnung vorgesehen ist, durch welche bei der Herstellung der Verbindung der beiden Rahmenflügelprofile ein Befestigungsmittel geführt wird. Die Montageöffnung kann einen vollständig umlaufenden Rand haben oder auch zur Seite geöffnet sein. Insbesondere sind sogar zwei oder mehr Montageöffnungen am Profilverbinder vorgesehen. Die Montageöffnung dient z.B. dazu, Befestigungsmittel in Form von Schrauben durchzulassen. Dabei kann die Befestigung in der Montageöffnung erfolgen. Bevorzugt ist es jedoch, wenn die Befestigungsmittel im Wesentlichen frei durch die Montageöffnung ragen und nur die Verbindung zwischen den beiden benachbarten und aneinandergrenzenden Rahmenflügelprofilen zur Verfügung stellen. Im Falle von Schrauben als Befestigungsmittel bedeutet dies, dass die Montageöffnungen keine Gewinde für einen Eingriff der Gewinde der Befestigungsmittel aufweisen. Dadurch, dass jedoch grundsätzlich eine geometrische Korrelation zwischen Befestigungsmittel und Montageöffnung besteht, wird die Verdrehsicherung weiter verstärkt. Insbesondere wird eine Zusatzsicherung gegeben, welche eingreift, wenn eine Verdrehsicherung durch die beschriebenen Abstützflächen bzw. Abstützabschnitte nicht mehr ausreichen sollte.

Ein weiterer Vorteil ist es, wenn bei einem erfindungsgemäßen Profilverbinder wenigstens einer der Abstützabschnitte in eines der Rahmenflügelprofile einschiebbar ausgebildet ist, für die definierte Positionierung des Profilverbinders relativ zu den Rahmenflügelprofilen. Dabei ist zumindest eines der Rahmenflügelprofile als Hohlprofil ausgestaltet. Durch diese Gewichtsreduktion entsteht ein Hohlraum bzw. ein Innenraum in diesem als Hohlprofil ausgebildeten Rahmenflügelprofil. In diesen Hohlraum bzw. Innenraum kann nun wenigstens einer der Abstützabschnitte eingebracht werden. Damit kann eine besonders große Anlagefläche als Abstützabschnitt zur Verfügung gestellt werden. Durch das Einschieben kann darüber hinaus z.B. ein Verpressen oder sogar ein Abscheren von Material am Abstützabschnitt erfolgen. Das Verpressen und das damit einhergehende Verspannen für das Erzeugen der Verdrehsicherung verhindert kleinstes Spiel zwischen dem Profilverbinder und dem jeweiligen Rahmenflügelprofil. Die Verdrehsicherung wird damit deutlich verbessert.

Ebenfalls von Vorteil ist es, wenn bei einem erfindungsgemäßen Profilverbinder wenigstens einer der beiden Abstützabschnitte mit einem Übermaß bezogen auf den Bauraum am Einbauort des zugehörigen Rahmenflügelprofils ausgebildet ist. Unter einem Übermaß ist wenigstens eine geometrische Erstreckungsrichtung zu verstehen, welche über der entsprechenden geometrischen Erstreckungsrichtung der korrespondierenden Abstützfläche des Rahmenflügelprofils liegt. Das Übermaß führt beim Positionieren des Profilverbinders an der entsprechenden Einbauposition dazu, dass z.B. eine Verformung dieses Übermaßes stattfindet. Diese Verformung kann elastisch oder auch plastisch erfolgen. Eine elastische Verformung führt zu einer elastischen Gegenkraft, so dass im eingebauten Zustand unter verbleibender elastischer Verformung diese elastische Rückstellkraft die Spannkraft für die Verdrehsicherung darstellt. Auch plastische Verformungen sind denkbar, so dass sozusagen ein Passsystem zur Verfügung gestellt wird. Ist bei einer plastischen Verformung des Profilverbinders dieser z.B. aus Metall hergestellt, so kann die plastische Verformung zu einer zusätzlichen Verfestigung, z.B. in Form der Kaltverfestigung, führen, Selbstverständlich kann das Übermaß auch durch entsprechende Ausgestaltungen des Rahmenflügelprofils und/oder des Abstützabschnittes abgeschert werden, so dass ebenfalls die beschriebene Passung bzw. der entsprechende Passsitz ausgebildet wird.

Bei einer Ausführungsform gemäß dem voranstehenden Absatz kann es von Vorteil sein, wenn das Übermaß durch wenigstens eine Strukturrippe ausgebildet ist. Unter einer Strukturrippe ist ein Abschnitt zu verstehen, welcher wenigstens teilweise über eine Grundfläche des Profilverbinders übersteht. Ein Abstützabschnitt, welcher wenigstens abschnittsweise als Strukturrippe ausgebildet ist, bildet damit einen definierten Unterschied zwischen dem Grundkörper des Profilverbinders und den entsprechenden Abstützabschnitten aus. Die Abstützabschnitte können dementsprechend definiert hergestellt werden, so dass für die übrigen Abschnitte, also insbesondere den Grundkörper des Profilverbinders, eine einfachere Herstellcharakteristik gelten kann. Insbesondere kann für die Strukturrippen eine genauere Toleranz in der Fertigung zugrunde gelegt werden, während der Grundkörper des Profilverbinders einfacher und mit größeren Toleranzabweichungen herstellbar wird.

Vorteilhaft ist es darüber hinaus, wenn bei einem erfindungsgemäßen Profilverbinder wenigsten einer der Abstützabschnitte mit einem Einführbereich ausgebildet ist, welcher die Einführung in die abstützende Position an dem jeweiligen Rahmenflügelprofil erleichtert. Eine Einführung ist dabei insbesondere in Form einer schiefen Ebene bzw. in Form eines konischen Abschnitts ausgebildet. Der Einführbereich ist dabei an zumindest einem Ende des Profilabschnitts bezogen auf die jeweilige Einführrichtung angeordnet. Beim Einführen in die gewünschte Einbausituation, also insbesondere in das Innere eines Hohlprofils eines Rahmenflügelprofils, kann dieses Einführen erleichtert erfolgen. Insbesondere kann der erste Schritt des Einführens im Wesentlichen ausschließlich über den Einführbereich stattfinden, so dass dieser Einführbereich noch nicht zur Abstützung und damit zur Verdrehsicherung dient. Vielmehr bringt der Einführbereich den Profilverbinder in eine Position, so dass in einem sozusagen zweiten Montageschritt das tatsächliche Anschlagen der Abstützfläche gegen das Rahmenflügelprofil stattfindet. Auf diese Weise kann besonders sicher und vor allem in vordefinierter Weise die gewünschte Einbauposition des Profilverbinders erreicht werden.

Ebenfalls Gegenstand der vorliegenden Erfindung ist ein Profilrahmen, aufweisend zumindest ein erstes Rahmenflügelprofil und wenigstens ein zweites Rahmenflügelprofil, welche miteinander auf Stoß verbunden sind. Ein erfindungsgemäßer Profilrahmen zeichnet sich dadurch aus, dass wenigstens ein Profilverbinder, insbesondere gemäß der vorliegenden Erfindung, für die Verdrehsicherung der Verbindung vorgesehen ist. Hierfür stützt sich der Profilverbinder mit einem ersten Abstützabschnitt an dem ersten Rahmenflügelprofil und mit einem zweiten Abstützabschnitt an dem zweiten Rahmenflügelprofil verdrehsicher ab. Ein erfindungsgemäßer Profilrahmen bringt damit die gleichen Vorteile mit sich, wie sie ausführlich mit Bezug auf einen erfindungsgemäßen Profilverbinder erläutert worden sind.

Ein erfindungsgemäßer Profilrahmen kann dahingehend weitergebildet werden, dass wenigstens eines der beiden Rahmenflügelprofile als Hohlprofil ausgebildet ist und der zugehörige Abstützabschnitt sich zumindest teilweise in das Innere dieses Hohlprofils erstreckt. Wie bereits zum Profilverbinder erläutert worden ist, kann auf diese Weise eine besonders vorteilhafte verdrehsichere Abstützung erzielt werden, Darüber hinaus wird der benötigte Bauraum des Profilverbinders auf ein Minimum reduziert. Insbesondere wird kein zusätzlicher Bauraum zwischen den beiden Rahmenflügelprofilen notwendig. Vielmehr können die beiden Rahmenflügelprofile weiter aneinander anschlagen, da der Profilverbinder sich zumindest abschnittsweise in das Innere eines entsprechenden Hohlprofils erstreckt. Darüber hinaus ist der Profilverbinder von außen nicht sichtbar, so dass auch ein hoher optischer Anspruch gewährleistet wird.

Vorteilhaft ist es darüber hinaus, wenn bei einem erfindungsgemäßen Profilrahmen zumindest eine Anlageleiste für die Anlage einer Füllung des Profilrahmens an wenigstens einem Rahmenflügelprofil vorgesehen ist. Diese Anlageleiste ist insbesondere in eine Führungsnut des Rahmenflügelprofils eingeschoben und/oder eingesetzt. Dementsprechend sind die Anfageleisten separate Bauteile mit Bezug auf die Rahmenflügelprofile. Die Anlageleisten sind vorzugsweise für die vertikalen Rahmenflügelprofile und die horizontalen Rahmenflügelprofile identisch ausgebildet. Im Vergleich zu bekannten Profilrahmen, bei welchen bei Stoßverbindungen die Anlageleisten im Bereich der Stoßverbindung abgefräst werden mussten, kann auch hier die Anlageleisten auf den Millimeter genau zugeschnitten und anschließend in die Führungsnut eingebracht werden. Der Zuschnitt erlaubt die Fertigung der Anlageleiste als separates Bauteil im Strangguss- oder Strangpressverfahren, so dass ebenfalls eine Reduktion der Komplexität unter gleichzeitiger Vermeidung des Frässchrittes erfolgt. Die Anlageleiste dient dabei insbesondere zur Anlage an eine Glasscheibe als Füllung. Selbstverständlich kann die Anlageleiste Dichtelemente aufweisen, um eine Abdichtung der Füllung zu erzielen. Auch separate Dichtelemente in separaten Führungen des Rahmenflügelprofils sind im Sinne der vorliegenden Erfindung denkbar.

Ein erfindungsgemäßer Profilrahmen ist vorteilhafterweise derart ausgebildet, dass wenigstens ein Befestigungsmittel, insbesondere wenigstens ein reversibles Befestigungsmittel, für die Befestigung der beiden Rahmenflügelprofile aneinander vorgesehen ist. Die Befestigungsmittel sind z.B. Schrauben oder Nieten. Schrauben werden jedoch im Sinne von reversiblen Befestigungsmitteln bevorzugt, da auf diese Weise auch eine Demontage des Profilrahmens wieder möglich wird. Selbstverständlich können die Befestigungsmittel in Form von Schrauben z.B. als selbstschneidende Schrauben ausgebildet sein, so dass in zumindest einem der beiden Rahmenflügelprofile entsprechende Schraubkanäle vorgesehen sind. Die Schraubkanäle müssen bei selbstschneidenden Schrauben als Befestigungsmittel nicht mit einem Gewinde versehen werden, so dass das Rahmenflügelprofil weiter im Stranggussverfahren bzw. im Strangpressverfahren herstellbar ist. Um sicherzustellen, dass eine möglichst einfache Montage erzielt werden kann, sind vorzugsweise die Montageöffnungen der Profilverbinder für alle Eckverbindungen identisch ausgebildet. So kann bei zwei oder mehr Befestigungsmitteln für jeden Profilverbinder eine einheitliche Bohrschablone für jede Montagesituation eingesetzt werden.

Ebenfalls zur Erfindung gehört ein Montageverfahren zur Herstellung eines Profilrahmens gemäß der vorliegenden Erfindung, mit einem Profilverbinder gemäß der vorliegenden Erfindung. Damit bringt ein Montageverfahren die gleichen Vorteile mit sich, wie sie ausführlich mit Bezug auf einen erfindungsgemäßen Profilrahmen und mit Bezug auf einen erfindungsgemäßen Profilverbinder erläutert worden sind.

Weitere Vorteile, Einzelheiten und Merkmale der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Gehrungsverbindung gemäß Stand der Technik,
- Fig. 2: die Vorbereitung einer Stoßverbindung gemäß Stand der Technik,
- Fig. 3: eine Detailaufnahme in Explosionsdarstellung im Einsatz eines erfindungsgemäßen Profilverbinders,
- Fig. 4: eine Ausführungsform eines erfindungsgemäßen Profilverbinders und
- Fig. 5: eine Ausführungsform eines erfindungsgemäßen Profilrahmens.

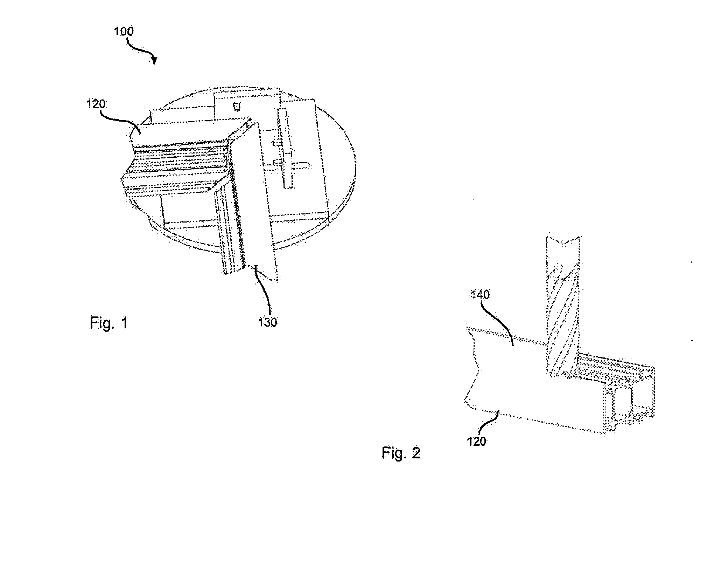

Die Figuren 1 und 2 zeigen den Stand der Technik. So zeigt Figur 1 die Vorbereitung einer Gehrungsverbindung zwischen einem ersten Rahmenflügelprofil 120 und einem zweiten Rahmenflügelprofil 130 eines Profilrahmens 100. Hierfür sind schematisch zwei Spannwerkzeuge dargestellt, welche über Eck die notwendige Spannkraft für das Verkleben aufbringen. Bereits hier ist der hohe Fertigungsaufwand gut zu erkennen.

In Figur 2 ist die Vorbereitung einer Stoßverbindung bekannter Rahmenflügelprofile 120 und 130 dargestellt. Bei diesen sind Anlageleisten 140 Teil des Rahmenflügelprofils 120, so dass für die Vorbereitung der Stoßfläche dieser Teil der Anlageleiste 140 mit einem Fräskopf entfernt werden muss. Auch dies erfordert Zusatzaufwand, der Zeit und Kosten mit sich bringt.

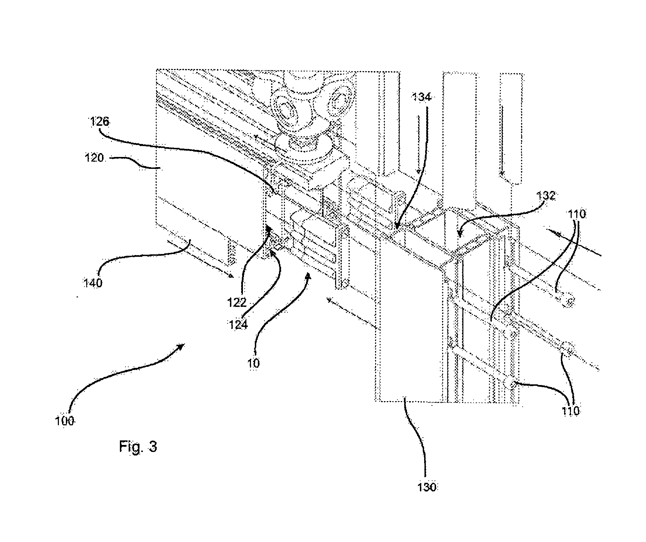

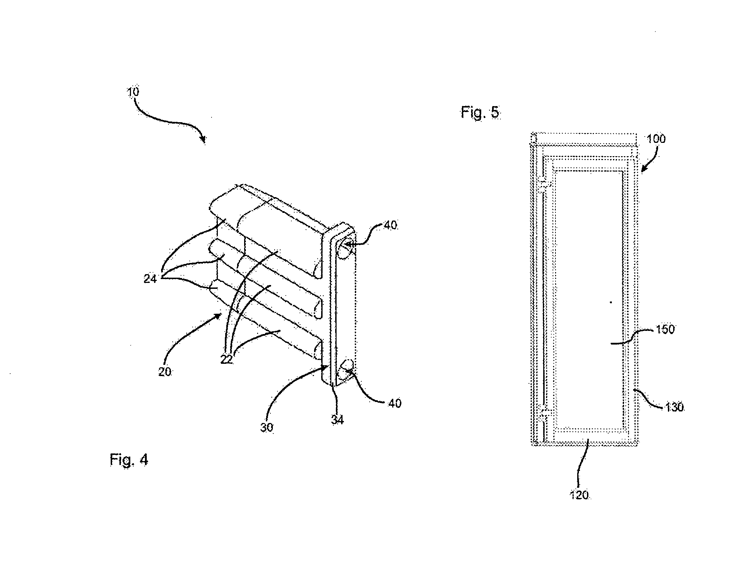

In Figur 4 ist schematisch eine Ausführungsform eines erfindungsgemäßen Profilverbinders 10 dargestellt. Dieser weist einen hammerartigen Kopf auf, welcher als erste Abstützfläche 30 wirkt. Darüber hinaus weist er über drei Strukturrippen 22 einen ersten Abstützabschnitt 20 auf, welcher sich später (siehe Figur 3) in den Innenraum eines als Hohlprofil ausgestalteten Rahmenflügelprofils 120 erstrecken kann.

Figur 5 zeigt einen Profilrahmen 100, welcher mit Stoßverbindungen von zwei horizontalen ersten Rahmenflügelprofilen 120 und zwei vertikalen zweiten Rahmenflügelprofilen 130 ausgebildet ist. Zwischen den einzelnen Rahmenflügelprofilen 120 und 130 ist hier eine Füllung 150, z.B. in Form einer Glasscheibe, angeordnet.

Figur 3 zeigt die Einbausituation einer Ausführungsform eines erfindungsgemäßen Profilverbinders 10. Hier wird in Explosionsdarstellung erläutert, wie die Montage stattfinden kann. So wird zuerst das erste (horizontale) Rahmenflügelprofil 120 zur Verfügung gestellt. Anschließend kann auf die gleiche Länge zugeschnitten eine Anlageleiste 150 in die entsprechende Führungsnut 124 eingeschoben werden. Nachfolgend wird der Profilverbinder 110 mit den bereits zur Figur 4 erläuterten Strukturrippen 22 als erster Abstützabschnitt 20 in das Innere 122 des ersten Rahmenflügelprofils 120 eingeschoben. Um das Einschieben zu erleichtern, ist am ersten Abstützabschnitt 20 ein Einführbereich 24 vorgesehen, welcher das Einschieben selbst verbessert und erleichtert. Nachfolgend wird das zweite (vertikale) Rahmenflügelprofil 130 aufgesetzt und gerät dabei in verdrehsicheren Abstützkontakt zu dem zweiten Abstützabschnitt 30. Um in diesen Kontakt zu gelangen, sind angefaste Flächen als Einführbereiche 34 am Profilverbinder 10 vorgesehen. Abschließend kann über Befestigungsmittel 110 in Form von Schrauben die finale Befestigung erfolgen. Bei den Schrauben als Befestigungsmittel 110 handelt es sich vorzugsweise um selbstschneidende Schrauben, weiche in einen entsprechenden Schraubkanal 126 des ersten Rahmenflügelprofils 120 eingreifen und dort ein Gewinde schneiden. Final kann nun die Befestigung der beiden Rahmenflügelprofile 120 und 130 aneinander über die Befestigungsmittel 110 definiert vorgegeben sein. Eine Verdrehsicherung ist unabhängig von den Befestigungsmitteln 110 über den Profilverbinder 10 dargestellt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoil, frei miteinander kombiniert werden, ohne den Rahmen der vorliegenden Erfindung zu verlassen.

### Bezugszeichenliste

- 10: Profilverbinders
- 20: erster Abstützabschnitt
- 22: Strukturrippe
- 24: Einführbereich
- 30: zweiter Abstützabschnitt
- 34: Einführbereich
- 40: Montageöffnung

- 100: Profilrahmen
- 110: Befestigungsmittel
- 120: erstes Rahmenflügelprofil
- 122: Inneres des Rahmenflügelprofils
- 124: Führungsnut
- 126: Schraubkanal
- 130: zweites Rahmenflügelprofil
- 132: Inneres des Rahmenflügelprofils
- 134: Führungsnut
- 140: Anlageleiste
- 150: Füllung

## Patentansprüche

1. Profilverbinder (10) für die Verdrehsicherung einer Verbindung eines ersten Rahmenflügelprofils (120) mit einem zweiten Rahmenflügelprofil (130) auf Stoß, aufweisend einen ersten Abstützabschnitt (20) für eine verdrehsichere Abstützung an dem ersten Rahmenflügelprofil (120) und einen zweiten Abstützabschnitt (30) für die verdrehsichere Abstützung an dem zweiten Rahmenflügelprofil (130).

2. Profilverbinder (10) nach Anspruch 1, **dadurch gekennzeichnet, dass** wenigstens eine Montageöffnung (40) vorgesehen ist, durch welche bei der Herstellung der Verbindung der beiden Rahmenflügelprofile (120, 130) ein Befestigungsmittel (110) geführt wird.

3. Profilverbinder (10) nach einem der vorangegangenen Ansprüche, **dadurch gekennzeichnet, dass** wenigstens einer der Abstützabschnitte (20, 30) in eines der Rahmenflügelprofile (120, 130) einschiebbar ausgebildet ist, für eine definierte Positionierung des Profilverbinders (10).

4. Profilverbinder (10) nach einem der vorangegangenen Ansprüche, **dadurch gekennzeichnet, dass** wenigstens einer der beiden Abstützabschnitte (20, 30) mit einem Übermaß bezogen auf den Bauraum am Einbauort des zugehörigen Rahmenflügelprofils (120, 130) ausgebildet ist.

5. Profilverbinder (10) nach Anspruch 4, **dadurch gekennzeichnet, dass** das Übermaß durch wenigstens eine Strukturrippe (22) ausgebildet ist.

6. Profilverbinder (10) nach einem der vorangegangenen Ansprüche, **dadurch gekennzeichnet, dass** wenigsten einer der Abstützabschnitte (20, 30) mit einem Einführbereich (24, 34) ausgebildet ist, welcher die Einführung in die abstützende Position an dem jeweiligen Rahmenflügelprofil (120, 130) erleichtert.

7. Profilrahmen (100) aufweisend zumindest ein erstes Rahmenflügelprofil (120) und wenigstens ein zweites Rahmenflügelprofil (130), welche miteinander auf Stoß verbunden sind, **dadurch gekennzeichnet, dass** wenigstens ein Profilverbinder (10), insbesondere mit den Merkmalen eines der Ansprüche 1 bis 6, für die Verdrehsicherung der Verbindung vorgesehen ist, welcher sich mit einem ersten Abstützabschnitt (20) an dem ersten Rahmenflügelprofil (120) und mit einem zweiten Abstützabschnitt (30) an dem zweiten Rahmenflügelprofil (130) verdrehsicher abstützt.

8. Profilrahmen (100) nach Anspruch 7, **dadurch gekennzeichnet, dass** wenigstens eines der beiden Rahmenflügelprofile (120, 130) als Hohlprofil ausgebildet ist und der zugehörige Abstützabschnitt (20, 30) sich zumindest teilweise in das Innere (122, 133) dieses Hohlprofils erstreckt.

9. Profilrahmen (10) nach einem der Ansprüche 7 oder 8, **dadurch gekennzeichnet, dass** zumindest eine Anlageleiste (140) für die Anlage einer Füllung (150) des Profilrahmens (100) an wenigstens einem Rahmenflügelprofil (120, 130) vorgesehen ist, welche insbesondere in eine Führungsnut (124, 134) des Rahmenflügelprofils (120, 130) eingeschoben undloder eingesetzt ist.

10. Profilrahmens (100) nach einem der Ansprüche 7 bis 9, **dadurch gekennzeichnet, dass** wenigstens ein Befestigungsmittel (110), insbesondere wenigstens ein reversibles Befestigungsmittel (110), für die Befestigung der beiden Rahmenflügelprofile (120, 130) aneinander vorgesehen ist.
